(19) Europäisches Patentamt / European Patent Office / Office européen des brevets

(11) **EP 1 673 243 B1**

(12) **FASCICULE DE BREVET EUROPEEN**

(45) Date de publication et mention
de la délivrance du brevet:
**03.09.2008 Bulletin 2008/36**

(21) Numéro de dépôt: **04791513.7**

(22) Date de dépôt: **11.10.2004**

(51) Int Cl.:
***B60G 11/16*** **(2006.01)**

(86) Numéro de dépôt international:
**PCT/FR2004/002572**

(87) Numéro de publication internationale:
**WO 2005/035282 (21.04.2005 Gazette 2005/16)**

(54) **SUSPENSIONS DE VEHICULE A RAIDEUR VARIABLE**

FAHRZEUGAUFHÄNGUNGSSYSTEM MIT VARIABLER STEIFIGKEIT

VARIABLE-STIFFNESS VEHICLE SUSPENSION SYSTEM

(84) Etats contractants désignés:
**AT BE BG CH CY CZ DE DK EE ES FI FR GB GR
HU IE IT LI LU MC NL PL PT RO SE SI SK TR**

(30) Priorité: **09.10.2003 FR 0311813**

(43) Date de publication de la demande:
**28.06.2006 Bulletin 2006/26**

(73) Titulaire: **ALLEVARD REJNA
AUTOSUSPENSIONS
92210 Saint-Cloud (FR)**

(72) Inventeur: **RHEIN, Jacky
F-91330 YERRES (FR)**

(74) Mandataire: **Barbin le Bourhis, Joël
Cabinet Beau de Loménie,
158, rue de l'Université
75340 Paris Cedex 07 (FR)**

(56) Documents cités:
**DE-B- 1 199 634        FR-A- 2 770 271
FR-A- 2 799 694        US-A- 5 375 870
US-B1- 6 196 564**

# Description

L'invention se rapporte à une suspension de véhicule à raideur variable et concerne plus particulièrement un perfectionnement apporté à un sous-ensemble d'une telle suspension comprenant un ressort monté en appui entre deux supports. Le document FR 2 799 694 qui forme l'état de la technique le plus proche selon le préambule de la revendication 1 montre une telle suspension.

Certains systèmes de suspension, notamment pour automobile font appel à des ressorts à raideur variable, à la fois pour obtenir un confort à faible charge acceptable et pour garantir un effort minimum entre appuis, en position de détente de la suspension (lorsque la roue est pendante). Cet effort minimum est en effet indispensable pour assurer le maintien du ressort entre les deux supports entre lesquels il est installé.

DE 11 99 634 décrit une suspension à ressort où le ressort à spires est maintenu entre des coupelles indéformables.

Or, un ressort à raideur variable du type à spires peut être de structure assez compliquée et par conséquent de fabrication coûteuse.

Par exemple, on peut être amené à conformer un tel ressort à spires de façon qu'au moins une portion d'extrémité de celui-ci présente un pas différent ou des spires de diamètre continûment variable, en hélice, permettant auxdites spires de s'engager les unes dans les autres sans entrer en contact de butées. Dans ce contexte, l'invention permet au moins de simplifier la conception du ressort et par conséquent de le rendre plus facile et moins coûteux à fabriquer. Avantageusement, l'invention permet, dans de nombreuses configurations de suspension, d'utiliser des ressorts à spires très simples à fabriquer, c'est-à-dire des ressorts à raideur constante.

Plus particulièrement, l'invention concerne une suspension de véhicule comportant un ressort à spires monté entre deux supports d'espacement variable, caractérisée en ce qu'au moins l'une des extrémités dudit ressort prend appui sur un support précité correspondant par l'intermédiaire d'un coussinet élastiquement déformable de raideur variable et présentant une variation de raideur significative, ledit coussinet étant solidaire du support correspondant.

Par "variation de raideur significative" on veut dire que le coussinet joue un rôle effectif dans l'évolution de la raideur globale du sous-ensemble complet (ressort et coussinet(s)). La raideur moyenne d'un tel coussinet est donc du même ordre de grandeur que celle du ressort, quoique, dans la majorité des cas, sensiblement inférieure pour jouer un rôle sur au moins une partie de la course de déflexion du sous-ensemble. En particulier, de tels coussinets sont avantageux pour donner une configuration particulière de la variation de raideur du sous-ensemble aux faibles charges.

Comme mentionné précédemment, ledit ressort peut être du type à raideur constante.

Avantageusement, un coussinet précité est intercalé entre chaque support précité et la spire terminale correspondante dudit ressort.

Selon un mode de réalisation possible, le coussinet comporte une embase annulaire épaisse en matériau élastomère ou analogue, élastiquement déformable. La variation de raideur du coussinet peut aussi dépendre en partie de sa conformation. Par exemple, l'embase peut comporter un évidement annulaire.

L'invention sera mieux comprise et d'autres avantages de celles-ci apparaîtront mieux à la lumière de la description qui va suivre, donnée uniquement à titre d'exemple et faite en référence aux dessins annexés dans lesquels :

- la figure 1 illustre schématiquement une partie de suspension conforme à l'invention, plus particulièrement un sous-ensemble comprenant un ressort monté entre deux supports ;
- la figure 2 est une vue analogue à la figure 1, le ressort étant comprimé ;
- la figure 3 est un graphe illustrant la raideur du sous-ensemble en fonction de l'état de compression du sous-ensemble ;
- la figure 4 est une vue d'un coussinet à l'état non contraint, selon une variante ; et
- la figure 5 illustre un sous-ensemble analogue à celui de la figure 1, dans une suspension à bras tirés.

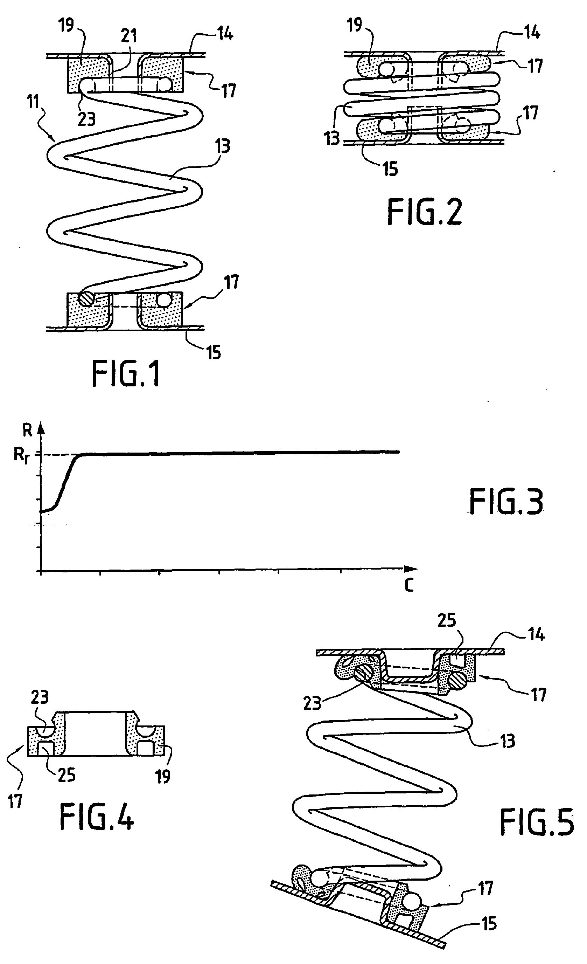

Sur les dessins et plus particulièrement sur les figures 1 et 2, on a représenté très schématiquement une partie de suspension d'un train arrière de véhicule, à savoir un sous-ensemble 11 comprenant un ressort à spires 13 monté entre deux supports 14, 15 d'espacement variable.

Selon une caractéristique remarquable de l'invention, au moins l'une des extrémités de ce ressort 13 prend appui sur un support 14, 15 précité, correspondant par l'intermédiaire d'un coussinet élastiquement déformable 17 de raideur variable et solidaire du support. La variation de raideur de ce coussinet doit être significative sur une partie du déplacement relatif entre les deux supports.

Dans l'exemple, les deux supports 14, 15 sont munis chacun d'un tel coussinet 17.

La variation de raideur du ou de chaque coussinet doit être significative sur une partie de la course de déplacement relatif entre les deux supports, notamment lorsque le ressort à spires 13 est sous faible contrainte, c'est-à-dire pratiquement relâché. Autrement dit, la raideur variable des coussinets 17 (plus ou moins écrasés) est exploitée sur une plage de variation où elle reste du même ordre de grandeur que la raideur moyenne du ressort lui-même quoique, ici, sensiblement inférieure à celle-ci. Dans l'exemple représenté, le ressort à spires 13 est du type à raideur constante. Très simplement, un coussinet 17 comporte une embase annulaire épaisse 19 en matériau élastomère ou analogue, élastiquement déformable, c'est-à-dire notamment susceptible de s'écraser avec une caractéristique à raideur variable jusqu'à un état d'écrasement maximum où toute élasticité disparaît. Le choix du matériau élastomère et le choix de son épaisseur peuvent permettre de déterminer sa caractéristique de raideur variable en fonction de son écrasement. Dans ce cas, l'embase 19 peut consister, comme représenté sur les figures 1 et 2, en un simple bloc annulaire compressible de matériau élastomère, engagé sur un plot du support défini ici par un crevé 21. Le coussinet est même réalisé d'un seul tenant dans un tel matériau élastomère et l'extrémité correspondante dudit ressort prend appui sur celui-ci. De préférence, comme représenté, le coussinet comporte un logement d'encastrement annulaire 23 conformé et dimensionné pour recevoir une spire terminale correspondante dudit ressort. La déformation du coussinet est visible en comparant les figures 1 et 2.

La figure 4 illustre une variante du coussinet 17 où la variation de raideur souhaitée est aussi en partie procurée par la forme même de l'embase. Celle-ci comporte en effet un évidement annulaire 25 dans son épaisseur, ici une simple gorge annulaire ouvrant sur sa face destinée à être en contact avec le support 14 ou 15. La gorge pourrait être remplacée par une série d'évidements ou cavités régulièrement répartis circonférentiellement.

Dans les exemples décrits, le sous-ensemble comporte deux coussinets 17, chacun étant intercalé entre un support 14, 15 et la spire terminale correspondante dudit ressort 13.

Dans ces conditions et de façon très générale, si la raideur du ressort est Rr et si les raideurs des coussinets sont respectivement R1 et R2, la raideur globale R du sous-ensemble 11 s'exprime de la façon suivante :

$$R = 1/((1/R2) + (1/Rr) + (1/R2)).$$

En choisissant convenablement les valeurs de Rr, R1 et R2 (le plus souvent R1 = R2 car les coussinets sont identiques) on peut obtenir une courbe de variation de raideur globale du sous-ensemble 11 conforme à la figure 3 où, de façon avantageuse, la raideur R croît sur une plage correspondant à une faible compression C de la suspension (ressort pratiquement détendu, c'est-à-dire roue pendante) jusqu'à se stabiliser à la raideur Rr (ici constante) du ressort lui-même. La partie incurvée croissante correspond à la déformation des coussinets, le ressort ne se comprimant pratiquement pas en raison de sa raideur sensiblement plus grande. Lorsque les coussinets sont complètement comprimés, la raideur R du sous-ensemble devient équivalente à celle du ressort, c'est-à-dire constante.

La figure 4 montre l'application du principe de l'invention à une suspension pour train arrière de véhicule où l'un des supports se déplace par rapport à l'autre selon une trajectoire courbe, comme par exemple une suspension à bras tirés, cette suspension ayant des angles d'ouverture importants. Plus précisément ici, le support 14 est fixe par rapport au châssis du véhicule tandis que l'autre support 15 est défini sur un bras pivotant articulé à ce même châssis. L'invention est particulièrement avantageuse pour ce type de suspension. En particulier, l'appui du ressort 13 par l'intermédiaire des deux coussinets à raideur variable 17 permet d'assurer le maintien du contact entre les spires terminales du ressort 13 et les coussinets 17 et entre ces mêmes coussinets et les supports 14, 15, grâce à une déformation non symétrique axialement des coussinets, en particulier dans une position extrême, roue pendante (ce qui est le cas de la figure 5) où le ressort est complètement détendu. Les déformations des coussinets empêchent le déboîtement du ressort. Dans cette position, le sous-ensemble 11 conserve une charge minimum due essentiellement à la compression des coussinets.

Cet agencement garantit toutes choses égales par ailleurs, un confort à vide acceptable et permet de définir un mécanisme de suspension plus compact (moins haut) ce qui constitue un avantage important pour la conception du train arrière d'un véhicule automobile. Inversement, l'invention permet aussi de raidir la suspension en surcharge.

**Revendications**

1.  Suspension de véhicule comportant un ressort à spires (13) monté entre deux supports (14, 15) d'espacement variable, au moins l'une des extrémités dudit ressort prenant appui sur un support précité correspondant par l'intermédiaire d'un coussinet élastiquement déformable (17) et solidaire du support correspondant, **caractérisée en ce que** ledit coussinet est de raideur variable et présente une variation de raideur significative.

2.  Suspension selon la revendication 1, **caractérisée en ce que** ledit ressort (13) est du type à raideur constante.

3.  Suspension selon la revendication 1 ou 2, **caractérisée en ce que** ledit coussinet (17) comporte une embase annulaire (19) épaisse, en matériau élastomère ou analogue, élastiquement déformable.

4.  Suspension selon la revendication 3, **caractérisée en ce que** ladite embase (19) comporte un évidement annulaire (25).

5.  Suspension selon la revendication 3, **caractérisée en ce que** ladite embase (19) comporte plusieurs évidements régulièrement répartis circonférentiellement.

**6.** Suspension selon l'une des revendications 3 à 4, **caractérisée en ce que** ledit coussinet comporte un logement d'encastrement annulaire (23) conformé et dimensionné pour recevoir une spire terminale correspondante dudit ressort (13).

**7.** Suspension selon l'une des revendications 3 à 6, **caractérisée en ce que** ledit coussinet (17) est réalisé en un seul bloc du même matériau élastomère.

**8.** Suspension selon l'une des revendications 3 à 7, **caractérisée en ce qu'**un coussinet précité est intercalé entre chaque support précité et la spire terminale correspondante dudit ressort (13).

## Claims

**1.** A vehicle suspension comprising a coil spring (13) mounted between two supports (14, 15) of variable spacing, at least one of the ends of said spring bearing against a corresponding one of said supports via an elastically deformable bushing (17) secured to the corresponding support, **characterized in that** said bushing is of variable stiffness and presents significant variation in stiffness.

**2.** A suspension according to claim 1, **characterized in that** said spring (13) is of the constant stiffness type.

**3.** A suspension according to claim 1 or claim 2, **characterized in that** said bushing (17) comprises a thick annular base (19) of elastomer material or the like, that is elastically deformable.

**4.** A suspension according to claim 3, **characterized in that** said base (19) includes an annular recess (25).

**5.** A suspension according to claim 3, **characterized in that** said base (19) includes a plurality of recesses that are regularly spaced apart circumferentially.

**6.** A suspension according to claim 3 or claim 4, **characterized in that** said bushing includes an annular groove (23) shaped and dimensioned to receive a corresponding end turn of said spring (13).

**7.** A suspension according to any one of claims 3 to 6, **characterized in that** said bushing (17) is made as a single piece of the same elastomer material.

**8.** A suspension according to any one of claims 3 to 7, **characterized in that** a said bushing is interposed between each of said supports and the corresponding end turn of said spring (13).

## Patentansprüche

**1.** Fahrzeugaufhängung mit einer Spiralfeder (13), die zwischen zwei Trägern (14, 15) mit variablem Abstand angebracht ist, wobei sich wenigstens das eine der Enden der Feder über ein elastisch verformbares und mit dem entsprechenden Träger fest verbundenes Lager (17) an einem entsprechenden vorgenannten Träger abstützt, **dadurch gekennzeichnet, daß** das Lager eine variable Steifigkeit hat und eine signifikante Steifigkeitsänderung aufweist.

**2.** Aufhängung nach Anspruch 1, **dadurch gekennzeichnet, daß** die Feder (13) von der Art mit konstanter Steifigkeit ist.

**3.** Aufhängung nach Anspruch 1 oder 2, **dadurch gekennzeichnet, daß** das Lager (17) einen dicken, ringförmigen Sockel (19) aus einem elastomeren oder ähnlichen, elastisch verformbaren Material aufweist.

**4.** Aufhängung nach Anspruch 3, **dadurch gekennzeichnet, daß** der Sockel (19) eine ringförmige Ausnehmung (25) aufweist.

**5.** Aufhängung nach Anspruch 3, **dadurch gekennzeichnet, daß** der Sockel (19) mehrere, in Umfangsrichtung gleichmäßig verteilte Ausnehmungen aufweist.

**6.** Aufhängung nach einem der Ansprüche 3 bis 4, **dadurch gekennzeichnet, daß** das Lager eine ringförmige Einbaumulde (23) aufweist, die ausgebildet und bemessen ist, um eine entsprechende Endwindung der Feder (13) aufzunehmen.

**7.** Aufhängung nach einem der Ansprüche 3 bis 6, **dadurch gekennzeichnet, daß** das Lager (17) aus einem einzigen Block aus dem gleichen Elastomermaterial gefertigt ist.

**8.** Aufhängung nach einem der Ansprüche 3 bis 7, **dadurch gekennzeichnet, daß** ein vorgenanntes Lager zwischen jedem vorgenannten Träger und der entsprechenden Endwindung der Feder (13) eingefügt ist.

FIG.1

FIG.2

FIG.3

FIG.4

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2799694

- DE 1199634